# EUROPÄISCHE PATENTSCHRIFT

(11) **EP 4 127 622 B1**
(45) Veröffentlichungstag und Bekanntmachung des Hinweises auf die Patenterteilung: **03.12.2025**
(21) Anmeldenummer: 21714875.8
(22) Anmeldetag: 26.03.2021
(51) Int. Cl.: G01J 1/02, G01J 1/42

(54) **COMPUTERIMPLEMENTIERTES VERFAHREN ZUM BESTIMMEN EINER SONNENEINSTRAHLUNG**
COMPUTERIMPLEMENTED METHOD FOR DETERMINING SOLAR IRRADIANCE
MÉTHODE MIS EN OEUVRE PAR ORDINATEUR POUR DÉTERMINER L'IRRADIANCE SOLAIRE

(30) Priorität: 27.03.2020 LU 101706
(43) Veröffentlichungstag der Anmeldung: 08.02.2023
(73) Patentinhaber: Leaftech GmbH, 10179 Berlin (DE)
(72) Erfinder: ZAHIRNIA, Sasan, 10117 Berlin (DE)
(74) Vertreter: Grabovac, Dalibor
(86) Internationale Anmeldenummer: PCT/EP2021/057934
(87) Internationale Veröffentlichungsnummer: WO 2021/191420

(56) Entgegenhaltungen:
- CN-A- 110 704 925
- DE-A1- 3 640 241
- GB-A- 2 462 755
- US-A1- 2017 284 691
- US-A1- 2018 187 484
- MACHETE RITA ET AL: "The use of 3D GIS to analyse the influence of urban context on buildings' solar energy potential", ENERGY AN BUILDINGS, ELSEVIER, AMSTERDAM, NL, vol. 177, 9 August 2018 (2018-08-09), pages 290 - 302, XP085483531, ISSN: 0378-7788, DOI: 10.1016/J.ENBUILD.2018.07.064

## Beschreibung

Die Erfindung betrifft ein computerimplementiertes Verfahren zum Bestimmen einer Sonneneinstrahlung auf zumindest einen Bereich eines modellierten Objekts. Darüber hinaus betrifft die Erfindung ein Computerprogramm, einen Datenträger und ein Datenträgersignal.

Aus dem Stand der Technik sind Verfahren bekannt, bei denen bestimmt wird, ob ein Gebäude oder Gebäudebestandteile beschattet sind. Das Bestimmungsergebnis dient als Steuer- oder Regelgröße für eine Sonnenschutzanlage, wie beispielsweise Jalousien, des Gebäudes. Insbesondere kann ein Gebäudefenster abhängig von dem Messwert unterschiedlich stark durch die Sonnenschutzanlage verdeckt werden.

Bei den Verfahren wird mittels eines beispielsweise auf dem Gebäudedach angebrachten Sensors bestimmt, ob das Gebäudedach beschattet ist oder nicht. Bei der Steuerung oder Regelung der Sonnenschutzanlage wird angenommen, dass jeder Gebäudeteil den gleichen Beschattungszustand wie das Gebäudedach aufweist.

Zumindest in Städten ist die Annahme, dass der Beschattungszustand vom Gebäudedach dem Beschattungszustand von anderen Gebäudeteilen entspricht, nicht korrekt. So haben die Nachbargebäude einen erheblichen Einfluss auf den Beschattungszustand von Gebäudeteilen. Verfahren zum Bestimmen einer Sonneneinstrahlung unter Berücksichtigung eines Korrekturfaktors, der von der Abschattung eines physischen Sensors abhängt, sind bekannt aus US 2018/187484 A1 oder DE 36 40 241 A1.

Die Aufgabe der Erfindung besteht darin, ein verbessertes computerimplementiertes Verfahren anzugeben.

Die Aufgabe wird durch ein computerimplementiertes Verfahren zum Bestimmen einer Sonneneinstrahlung mit den Schritten von Anspruch 1 gelöst.

Die oben genannten Verfahrensschritte werden in der obigen Reihenfolge nacheinander durchgeführt.

Das erfindungsgemäße Verfahren weist den Vorteil auf, dass die Sonneneinstrahlung auf den Objektbereich als Eingangsdaten einer Rechnereinrichtung, auf der das erfindungsgemäße Verfahren ausgeführt wird, zugeführt wird. Im Gegensatz dazu wird bei den bekannten Verfahren nur der Beschattungszustand auf den Objektbereich der Rechnereinrichtung als Eingangsdaten zugeführt. Somit ist es bei dem erfindungsgemäßen Verfahren möglich, die von dem Objektbereich empfangene Sonnenenergie in dem modellierten Objekt zu bestimmen.

Darüber hinaus kann durch Verwendung des virtuellen Sensors die Sonneneinstrahlung auf jeden beliebigen modellierten Objektbereich bestimmt werden. So muss der virtuelle Sensor lediglich an dem modellierten Objektbereich platziert werden, an dem die Sonneneinstrahlung bestimmt werden soll. Dabei ist es möglich, das modellierte Objekt mit mehreren virtuellen Sensoren zu versehen, sodass die Sonneneinstrahlung an verschiedenen Bereichen des modellierten Objektes berechnet werden kann. Bei Verwendung einer bestimmten Anzahl an virtuellen Sensoren kann damit die Sonneneinstrahlung auf das gesamte modellierte Objekt berechnet werden.

Ein weiterer Vorteil des Verfahrens besteht darin, dass es bei dem erfindungsgemäßen Verfahren möglich ist, die Sonneneinstrahlung an jedem gewünschten Objektbereich genauer zu bestimmen. Dies ist möglich, weil durch den wenigstens einen Korrekturfaktor berücksichtigt wird, dass nicht die gesamte gemessene Sonneneinstrahlung auf jeden Objektbereich wirkt. Der Korrekturfaktor kann von einer Objektumgebung, wie beispielsweise Nachbargebäude, und/oder einer Ausrichtung und/oder Neigung des Objektbereichs abhängen, an dem der virtuelle Sensor angebracht ist.

Dabei kann die Sonneneinstrahlung günstiger bestimmt werden als im Vergleich zu einem Verfahren, bei dem eine Vielzahl von physischen Sensoren an den Objektbereichen, bei denen die Sonneneinstrahlung bestimmt werden soll. Dies ist durch Verwendung der virtuellen Sensoren möglich. Die virtuellen Sensoren bieten außerdem den Vorteil, dass keine Kalibrierung und/oder physische Installation notwendig ist, sodass das erfindungsgemäße Verfahren auch schneller und einfacher ausgeführt werden kann als die aus dem Stand der Technik bekannten Verfahren.

Das modellierte Objekt kann dem physischen Objekt zugeordnet sein, insbesondere dem physischen Objekt entsprechen. Alternativ ist es möglich, dass das modellierte Objekt nicht identisch zu dem physischen Objekt ist und einige Objektbestandteile nicht enthält, die für die Bestimmung der Sonneneinstrahlung nicht relevant ist. Die Verwendung eines modellierten Objekts bietet den Vorteil, dass die Bestimmung der Sonneneinstrahlung auf den Objektbereich von einem beliebigen Ort erfolgen kann. Insbesondere ist es nicht mehr nötig, dass die Bestimmung der Sonneneinstrahlung im Objekt oder in der Nähe des Objekts erfolgt.

Als physischer Sensor wird ein Sensor verstanden, der eine Masse und/oder Geometrie aufweist. Dagegen wird als ein virtueller Sensor ein Sensor verstanden, der keine Masse aufweist und somit real nicht existiert. Bei dem Sensor wird die Zielgröße nicht direkt gemessen, sondern beispielsweise anhand zu ihr korrelierenden Messgrößen und eines Modells der Korrelation berechnet.

Als Sonneneinstrahlung wird die Summe aus direkt gerichteter und diffuser Strahlungsleistung verstanden, die von einem Flächenelement mit vorgegebener Fläche, insbesondere einem Quadratmeter, eines Objekts empfangen wird.

Das Objekt kann jeder beliebiger Gegenstand sein. Nachfolgend ist beschrieben, dass das Objekt ein Gebäude ist. Das erfindungsgemäße Verfahren ist jedoch nicht darauf beschränkt, die Sonneneinstrahlung auf ein Gebäude zu bestimmen, sondern kann auch zur Bestimmung der Sonneneinstrahlung auf andere Objekte eingesetzt werden.

Wie oben bereits ausgeführt ist, empfängt das Verfahren die durch den physischen Sensor gemessene Sonneneinstrahlung als Eingangsdaten. Dabei kann der physische Sensor ein Pyranometer sein. Dadurch kann auf besonders einfache Weise die Sonneneinstrahlung gemessen werden. Der physische Sensor kann derart ausgeführt sein, dass er eine direkte Sonneneinstrahlung und eine diffusive Sonneneinstrahlung misst. Alternativ können mehrere physische Sensoren vorhanden sein, wobei ein Sensor die direkte Sonneneinstrahlung und ein anderer Sensor die diffuse Sonneneinstrahlung misst.

Der physische Sensor kann an einem dem modellierten Objekt zugeordneten physischen Objekt selbst angebracht sein. Alternativ kann es sich bei dem physischen Sensor um einen Sensor einer Wetterstation handeln. Dies bietet den Vorteil, dass der Nutzer des Verfahrens auf bereits vorliegende Daten zurückgreifen kann und nicht selber einen physischen Sensor an dem Objekt anbringen muss. Die durch den physischen Sensor gemessene Sonneneinstrahlung wird, wie nachfolgend näher beschrieben ist, weiterverarbeitet, um die Sonneneinstrahlung auf den virtuellen Sensor zu berechnen.

Die von dem physischen Sensor gemessene Sonneneinstrahlung kann in einem elektrischen Speicher hinterlegt sein. Insofern kann die Rechnereinrichtung, auf der das Verfahren ausgeführt wird, die Daten von dem elektrischen Speicher empfangen. Der elektrische Speicher kann Bestandteil eines Computers sein, an dem das Verfahren ausgeführt wird und der die Rechnereinrichtung aufweist. Die Rechnereinrichtung kann ein Prozessor sein oder einen Prozessor aufweisen. Alternativ kann der elektrische Speicher Bestandteil eines anderen Computers sein. In diesem Fall können der Computer und die andere Rechnereinrichtung Bestandteil eines Netzwerks sein, sodass die Daten von dem anderen Computer empfangen werden.

Alternativ ist es auch möglich, dass die Daten direkt von dem physischen Sensor empfangen werden.

Wie zuvor bereits beschrieben ist, wird das Objekt mit wenigstens einem virtuellen Sensor versehen. Dies kann erfolgen bevor der Korrekturfaktor bestimmt wird, insbesondere bevor bestimmt wird, ob der virtuelle Sensor abgeschattet wird. Dazu wird vorher das Objekt modelliert. Die Anordnung des wenigstens einen virtuellen Sensors an dem Objekt kann durch den Benutzer erfolgen. Dabei kann der virtuelle Sensor an jedem beliebigen Ort des Objekts angeordnet werden. Dies bietet den Vorteil, dass der Benutzer auf einfache Weise Informationen über die Sonneneinstrahlung auf den ihn interessierenden Objektbereich erhalten kann.

Der physische Sensor kann ein Sensor einer Wetterstation sein. Besonders bevorzugt ist, wenn als physischer Sensor ein Sensor ausgewählt wird, der nicht oder möglichst wenig beschattet ist.

Für den Fall, dass der physische Sensor an dem Objekt angeordnet ist, kann sich eine modellierte Objektoberfläche, die der physischen Objektoberfläche zugeordnet ist, an der der physische Sensor angeordnet ist, von einer anderen modellierten Objektoberfläche unterscheiden, an der der virtuelle Sensor angeordnet ist. Dabei kann der physische Sensor auf einer Objektoberfläche angeordnet sein, die räumlich und/oder zeitlich weniger beschattet wird als die Objektoberfläche, auf die der virtuelle Sensor in dem modellierten Objekt angeordnet ist. Bei einem Gebäude kann der physische Sensor auf dem Gebäudedach angeordnet sein, während hingegen der virtuelle Sensor an einer Außenwand des Gebäudes angeordnet ist.

Dabei kann der physische Sensor an einer Stelle des physischen Objekts angebracht sein, bei dem das Risiko einer Beschattung des physischen Sensors kleiner ist als das Risiko einer Beschattung einer Stelle des physischen Objekt, bei der im modellierten Objekt der virtuelle Sensor angeordnet ist. Alternativ oder zusätzlich kann der physische Sensor an einer Stelle des physischen Objekts angeordnet sein, bei der eine Gesamtzeitdauer einer Beschattung des physischen Sensors pro Kalenderjahr kleiner ist als eine Gesamtzeitdauer einer Beschattung einer Stelle des physischen Objekts, bei der im Model der virtuelle Sensor angeordnet ist. Im Ergebnis wird der physische Sensor derart platziert, dass beispielswiese Nachbarobjekte, die in der Nähe des Objekts angeordnet sind, den physischen Sensor nicht beschatten oder möglichst wenig beschatten.

Bei einer besonderen Ausführung kann die Sonneneinstrahlung auf den physischen Sensor zeitabhängig erfasst und bereitgestellt werden. Insbesondere kann die Sonneneinstrahlung auf den physischen Sensor iterativ erfasst und bereitgestellt werden, wobei die iterative Erfassung und Bereitstellung je Zeitinkrement über ein Kalenderjahr durchgeführt wird. Die iterative Erfassung und Bereitstellung der Sonneneinstrahlung je Zeitinkrement über ein Kalenderjahr auf den physischen Sensor bietet den Vorteil, dass die Sonneneinstrahlung auf den virtuellen Sensor genau bestimmt werden kann. Dies ist möglich, weil bei der Bestimmung auch berücksichtigt wird, dass sich die Sonneneinstrahlung auf das Objekt, insbesondere auf den physischen Sensor, im Laufe des Kalenderjahres ändert.

Auf der Basis der empfangenen Sonneneinstrahlung kann eine direkte Sonneneinstrahlung auf den physischen Sensor und/oder eine diffuse Sonneneinstrahlung auf den physischen Sensor berechnet werden. Dies ist möglich, weil bei Kenntnis der Sonneneinstrahlung auf den physischen Sensor die direkte und diffuse Sonneneinstrahlung auf den physischen Sensor berechnet werden kann. Diese Berechnung erfolgt, wenn als Eingangsdaten an die Rechnereinrichtung nur ein Wert für die Sonneneinstrahlung auf den physischen Sensor bereitgestellt werden und somit keine Unterteilung in den direkten und diffusen Sonneinstrahlungsanteil bereitgestellt wird.

Zusätzlich wird bei der Bestimmung der Sonneneinstrahlung auf den virtuellen Sensor wenigstens eine Information betreffend die direkte Sonneneinstrahlung und eine Information betreffend die diffuse Sonneneinstrahlung bereitgestellt. Die Information enthält Aussagen zur Intensität der direkten Sonneneinstrahlung und der diffusiven Sonneneinstrahlung. Dabei wird die direkte Sonneneinstrahlung und die diffusive Sonneneinstrahlung durch wenigstens einen physischen Sensor gemessen. Insbesondere kann die direkte Sonneneinstrahlung durch einen physischen Sensor und die diffuse Sonneneinstrahlung durch einen anderen physischen Sensor gemessen werden.

Als direkte Sonneneinstrahlung wird der Teil der Sonneneinstrahlung bezeichnet, die beispielsweise den physischen Sensor ohne Reflektion, Brechung, Beugung oder anderweitige Ablenkung direkt trifft. Dagegen wird als diffuse Sonneneinstrahlung der Anteil der Sonneneinstrahlung bezeichnet, der beispielsweise den physischen Sensor indirekt erreicht. Das Licht wird also vor dem Auftreffen gestreut, reflektiert, gebeugt oder gebrochen.

Die Sonneneinstrahlung auf den physischen Sensor kann iterativ erfasst und bereitgestellt werden, wobei die iterative Erfassung und Bereitstellung je Zeitinkrement über beispielsweise ein Kalenderjahr durchgeführt wird. Darüber hinaus kann zeitabhängig bestimmt werden, ob der wenigstens eine virtuelle Sensor abgeschattet wird. Insbesondere kann iterativ bestimmt werden, ob der wenigstens eine virtuelle virtuelle Sensor abgeschattet wird, wobei die iterative Bestimmung je Zeitinkrement beispielsweise über ein Kalenderjahr durchgeführt wird.

Bei Ausführungen, bei denen ein einziger virtueller Sensor oder mehrere virtuelle Sensoren vorhanden sind, kann für, insbesondere jeden, virtuellen Sensor wenigstens ein Korrekturfaktor oder mehrere Korrekturfaktoren bestimmt werden. Im Folgenden wird darauf eingegangen welche Korrekturfaktoren für den virtuellen Sensor jeweils bestimmt werden können.

So wird ein Korrekturfaktor für die direkte Sonneneinstrahlung bestimmt. Darüber hinaus wird ein anderer Korrekturfaktor für die direkte Sonneneinstrahlung bestimmt. Außerdem wird ein Korrekturfaktor für die diffuse Sonneneinstrahlung bestimmt und es wird zusätzlich ein anderer Korrekturfaktor für die diffuse Sonneneinstrahlung bestimmt.

Der Korrekturfaktor für die direkte Sonneneinstrahlung hängt davon ab, ob der virtuelle Sensor abgeschattet wird.

Der jeweilige Korrekturfaktor kann zeitabhängig berechnet werden. Dabei kann der jeweilige Korrekturfaktor für die Zeitpunkte bestimmt werden, zu denen die Sonneneinstrahlung auf den physischen Sensor bestimmt wurde.

Dabei kann zeitabhängig bestimmt werden, ob der wenigstens eine virtuelle Sensor abgeschattet wird. Insbesondere kann iterativ bestimmt werden, ob der wenigstens eine virtuelle Sensor abgeschattet wird, wobei die iterative Bestimmung je Zeitinkrement über beispielsweise ein Kalenderjahr durchgeführt wird.

Die iterative Bestimmung, ob der virtuelle Sensor abgeschattet ist, bietet den Vorteil, dass die Sonneneinstrahlung auf den virtuellen Sensor genau bestimmt werden kann. Dies ist möglich, weil bei der Bestimmung auch berücksichtigt wird, dass sich die Sonneneinstrahlung auf das Objekt, insbesondere auf den physischen Sensor, im Laufe des Kalenderjahres ändert.

Beim Bestimmen, ob der wenigstens eine virtuelle Sensor abgeschattet ist, kann eine Objektumgebung modelliert werden. Dabei können andere Objekte modelliert werden, die sich in der Nähe des Objekts befinden. Insbesondere kann bestimmt werden, ob Nachbarobjekte existieren, die auf die Beschattung des Objekts Einfluss haben. Falls derartige Nachbarobjekte existieren, werden Sie im Rahmen der Modellierung der Objektumgebung berücksichtigt. Die Modellierung kann durch den Benutzer erfolgen, indem die Nachbarobjekte zusätzlich zu dem Objekt modelliert werden.

Alternativ können bereits bestehende Modellierdaten in dem Modell berücksichtigt werden. Insbesondere wenn das Objekt ein Gebäude ist, können bereits bestehende Modellierdaten eingesetzt werden. So existieren bereits Daten, in denen Städte mit deren Gebäuden bereits modelliert sind. Durch Verwenden derartiger Daten vereinfacht sich die Modellierung des Objekts und/oder der Objektumgebung erheblich.

Bei der Modellierung kann eine Außenkontur des Nachbarobjekts und/oder eine Höhe des Nachbarobjekts berücksichtigt werden. Als Höhe wird der Abstand eines oberen Abschnitts des Nachbarobjekts vom Erdboden verstanden. Diese Faktoren weisen einen hohen Einfluss auf die Beschattung des Objekts auf, sodass die Sonneinstrahlung auf den virtuellen Sensor genau bestimmt werden kann.

Bei der Modellierung der Objektumgebung kann ein Nachbarobjektverlauf berechnet werden. Insbesondere kann der Nachbarobjektverlauf von einem Azimutwinkel und einem Höhenwinkel abhängen. Darüber hinaus kann der Nachbarobjektverlauf von der Außenkontur des Nachbarobjekts und/oder der Höhe des Nachbarobjekts abhängen. Der Nachbarobjektverlauf kann mehrere Nachbarobjekte, insbesondere alle Nachbarobjekte des Objekts, berücksichtigen. Insbesondere kann der Nachbarobjektverlauf die Außenkonturen von mehreren Nachbarobjekten berücksichtigen.

Als Azimutwinkel wird ein nach einer Himmelsrichtung orientierter Horizontalwinkel verstanden. Der Höhenwinkel ist der Winkel zwischen einer Horizontalen und einem Objekt und/oder der Sonne. Dabei kann bei dem Objekt bei dem Höhenwinkel auf eine Objektoberfläche und/oder Objektkante abgestellt werden. Bei der Sonne kann bei dem Höhenwinkel auf einen Punkt, insbesondere einen Mittepunkt, abgestellt werden.

Durch die Bestimmung des Nachbarobjektverlaufs ist die Modellierung der Objektumgebung abgeschlossen. Wie nachfolgend näher erläutert ist, kann durch Verwendung des Nachbarobjektverlaufs auf einfache Weise bestimmt werden, ob der wenigstens eine virtuelle Sensor beschattet ist oder nicht.

Bei einer besonderen Ausführung kann eine Sonnenbahn berücksichtigt werden, die abhängig von dem Azimutwinkel und dem Höhenwinkel ist. Dabei kann eine Sonnenbahn für mehrere Kalendertage eines Kalenderjahres und/oder für mehrere Zeitinkremente eines Kalendertages berechnet werden. Dadurch wird auf einfache Weise berücksichtigt, dass sich die Sonnenbahn im Laufe des Jahres ändert. Die Berechnung kann für jeden beliebigen Zeitpunkt erfolgen. Die Daten zur Bestimmung des Sonnenbahnverlaufs können in einem elektrischen Speicher hinterlegt sein. Dabei können die Daten der Rechnereinrichtung, insbesondere dem erfindungsgemäßen Verfahren, bereitgestellt werden.

Durch einen Vergleich der Sonnenbahn mit dem Nachbarobjektverlauf kann bestimmt werden, ob der virtuelle Sensor beschattet ist oder nicht. Dabei kann bestimmt werden, dass der virtuelle Sensor nicht beschattet wird, wenn ein Höhenwinkel der Sonnenbahn größer ist als ein Höhenwinkel des Objektverlaufs. Der Höhenwinkel kann sich auf den höchsten Bereich des Objekts beziehen. Darüber hinaus kann bestimmt werden, dass der virtuelle Sensor beschattet wird, wenn ein Höhenwinkel der Sonnenbahn kleiner ist als ein Höhenwinkel des Objektverlaufs. Alternativ oder zusätzlich kann eine Außenkontur des Nachbarobjekts eine Beschattungsfläche begrenzen. Die Beschattungsfläche kann je nach Objekt auch durch einen Erdboden begrenzt werden. Bei anderen Objekten, wie beispielsweise Balkonen, Ästen mit Blättern oder dergleichen, kann die Beschattungsfläche nur durch die Außenkontur der Objektumgebung begrenzt werden. Dabei ist das Objekt in einem Azimutwinkelbereich beschattet, bei dem die Sonnenbahn innerhalb der Beschattungsfläche angeordnet ist.

Im Ergebnis kann bei beiden Verfahren durch Berücksichtigung der Sonnenbahn und des Nachbarobjekts oder der Nachbarobjekte auf einfache Weise bestimmt werden, ob das Objekt, insbesondere der Objektbereich, an dem der virtuelle Sensor angeordnet ist, beschattet ist oder nicht.

Dem Korrekturfaktor für die direkte Sonneneinstrahlung kann ein vorgegebener Wert zugewiesen werden, wenn der virtuelle Sensor nicht beschattet wird. So kann dem Korrekturfaktor der Wert 1 zugewiesen werden, wenn der virtuelle Sensor nicht beschattet wird. Darüber hinaus kann dem Korrekturfaktor ein anderer vorgegebener Wert zugewiesen werden, wenn der virtuelle Sensor beschattet wird. So kann dem Korrekturfaktor der Wert 0 zugewiesen werden.

Der andere Korrekturfaktor für die direkte Sonneneinstrahlung hängt vom Azimutwinkel einer Flächennormalen einer Objektfläche und einem Neigungswinkel der Objektfläche ab, an dem der virtuelle Sensor positioniert ist. Als Neigungswinkel wird der Winkel der Objektoberfläche zu der Horizontalen verstanden. Darüber hinaus hängt der andere Korrekturfaktor von dem Azimutwinkel und Höhenwinkel der Sonne ab.

Darüber hinaus wird für jeden virtuellen Sensor der Korrekturfaktor für die diffuse Sonneneinstrahlung ermittelt. Der Korrekturfaktor für die diffuse Sonneneinstrahlung hängt von einem Azimutwinkel und dem Nachbarobjektverlauf ab. Zur Bestimmung des anderen Korrekturfaktors für die diffuse Sonneneinstrahlung wird in einem ersten Schritt eine von den Nachbarobjekten entlang des Azimutwinkels eingenommene Fläche berechnet.

Die Fläche entspricht dem Integral des Nachbarobjektverlaufs entlang des Azimutwinkels. Der Korrekturfaktor für die diffuse Sonneneinstrahlung kann dadurch bestimmt werden, dass die bestimmte Fläche zu einer Gesamtfläche ins Verhältnis gesetzt wird.

Die Gesamtfläche entspricht der von den dem Nachbarobjekt oder der Nachbarobjekte entlang des Azimutwinkels eingeschlossenen Fläche und der nicht eingeschlossenen Fläche, von der der visuelle Sensor mit Sonnenlicht beaufschlagt werden kann. Der Korrekturfaktor für die diffuse Sonneneinstrahlung enthält somit eine Aussage zu welchem Anteil der gesamt möglichen Fläche ein visueller Sensor mit Sonnenlicht beaufschlagt werden kann.

Der andere Korrekturfaktor für die diffuse Sonneneinstrahlung hängt vom Neigungswinkel eines Objektbereichs, insbesondere einer Objektoberfläche, ab, an dem der virtuelle Sensor positioniert ist. Insbesondere kann der Korrekturfaktor für die diffuse Sonneneinstrahlung durch die Formel (1 + cos β)/2 entsprechen, wobei β dem Neigungswinkel des Objektbereichs, insbesondere der Objektoberfläche, entspricht.

Der andere Korrekturfaktor für die direkte Sonneneinstrahlung und der andere Korrekturfaktor für die diffuse Sonneneinstrahlung berücksichtigen, dass ein Energieeintrag in den Objektbereich, an dem der virtuelle Sensor angeordnet ist, von dem Einstrahlungswinkel des Sonnenstrahls auf den Objektbereich abhängt. Somit kann durch Berücksichtigung dieser Korrekturfaktoren der Energiebetrag in den Objektbereich genau bestimmt werden.

Im Anschluss an die Bestimmung des Korrekturfaktors oder der Korrekturfaktoren wird die direkte Sonneneinstrahlung auf den virtuellen Sensor bestimmt. Die Bestimmung erfolgt unter Berücksichtigung der bereitgestellten, insbesondere gemessenen, direkten Sonneneinstrahlung und des Korrekturfaktors für die direkte Sonneneinstrahlung und des anderen Korrekturfaktors für die direkte Sonneneinstrahlung. Insbesondere kann der Korrekturfaktor oder die Korrekturfaktoren mit dem bereitgestellten Wert der direkten Sonneneinstrahlung auf den physischen Sensor multipliziert werden.

Darüber hinaus wird eine diffuse Sonneneinstrahlung auf den virtuellen Sensor unter Berücksichtigung der gemessenen, diffusen Sonneneinstrahlung und des des Korrekturfaktors für die diffuse Sonneneinstrahlung und des anderen Korrekturfaktors für die diffuse Sonneneinstrahlung, bestimmt werden. Dazu kann der Korrekturfaktor oder die Korrekturfaktoren mit dem bereitgestellten Wert der diffusen Sonneneinstrahlung multipliziert werden.

Dabei wird basierend auf der ermittelten direkten Sonneneinstrahlung auf den virtuellen Sensor und der diffusen Sonneneinstrahlung auf den virtuellen Sensor die Sonneneinstrahlung auf den virtuellen Sensor bestimmt wird. Dazu kann der ermittelte Wert der direkten Sonneneinstrahlung auf den virtuellen Sensor mit dem ermittelten Wert der diffusen Sonneneinstrahlung auf den virtuellen Sensor addiert werden. Somit kann für einen betrachteten Zeitraum die dem virtuellen Sensor zugeführte Sonnenenergie bestimmt werden. Durch Abstellen auf die Sonneneinstrahlung kann auf einfachere Weise die dem Objektbereich über einen Zeitraum zugeführte Sonnenenergie bestimmt werden als bei den bisherigen Verfahren möglich. Insbesondere kann genauer bestimmt werden, wann in dem physischen Objekt einzelne Objektbereiche beispielsweise durch Sonnenschutzanlagen beschattet werden sollen. Dazu können die Sonnenschutzanlagen entsprechend angesteuert werden.

Im Vergleich zu bekannten Lösungen können hier sowohl der visuelle als auch der thermische Effekt der solaren Einstrahlung berücksichtigt werden. Zudem kann beispielsweise der Einfluss der solaren Einstrahlung auf den Heiz- und Kühlbedarf des Gebäudes quantifiziert und in der Steuerung des Gebäudes berücksichtigt werden.

Wie zuvor bereits beschrieben ist, kann das Objekt ein Gebäude sein. Bei diesem Fall kann eine Sonnenschutzanlage des Gebäudes, wie beispielsweise eine Jalousie, abhängig von der bestimmten Sonneneinstrahlung auf den virtuellen Sensor gesteuert oder geregelt werden. Im Ergebnis kann die Sonnenschutzanlage des physischen Objekts basierend auf der im Modell ermittelten Sonneneinstrahlung auf den virtuellen Sensor genau gesteuert oder geregelt werden. Der wenigstens eine virtuelle Sensor kann an einem Gebäudefenster angeordnet sein. Das Anordnen der virtuellen Sensoren an Gebäudefenstern bietet den Vorteil, dass die Sonneneinstrahlung nur an den Bereichen des Gebäudes bestimmt wird, die für den solaren Energieeintrag in das Gebäude maßgeblich sind und/oder für die Steuerung oder Regelung der Sonnenschutzanlage benötigt werden. Insofern reduziert die Anordnung der virtuellen Sensoren an dem Gebäudefenster Rechnerzeit.

Von besonderem Vorteil ist eine Rechnereinrichtung, auf der ein erfindungsgemäßes Verfahren ausgeführt wird. Außerdem ist von Vorteil ein Computerprogramm, das Befehle umfasst, die bei der Ausführung des Programms durch einen Computer diesen veranlassen, das erfindungsgemäße Verfahren durchzuführen. Außerdem ist ein Datenträger vorteilhaft, auf dem das erfindungsgemäße Computerprogramm gespeichert ist. Darüber hinaus ist ein Datenträgersignal von Vorteil, das ein erfindungsgemäßes Computerprogramm überträgt.

In den Figuren ist der Erfindungsgegenstand schematisch dargestellt, wobei gleiche oder gleichwirkende Elemente zumeist mit denselben Bezugszeichen versehen sind. Dabei zeigt:
Fig. 1 ein modelliertes Gebäude mit einem physischen Sensor und einer Vielzahl von virtuellen Sensoren,
Fig. 2 ein Ablaufdiagramm des erfindungsgemäßen Verfahrens,
Fig. 3 ein Diagramm, das einen Nachbarobjektverlauf zeigt,
Fig. 4 ein Diagramm, das eine Sonnenbahn zeigt,
Fig. 5 ein Diagramm, in dem der Nachbarobjektverlauf und die Sonnenbahn eingezeichnet sind.

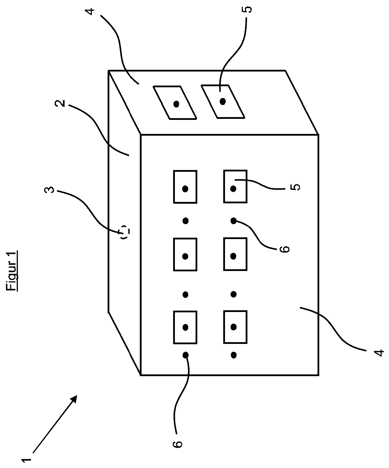

Figur 1 zeigt ein modelliertes Gebäude 1, das beispielsweise in einer nicht dargestellten Anzeigevorrichtung, wie beispielsweise einem Display, angezeigt wird. Im Folgenden wird ausgehend von dem modellierten Gebäude 1 erläutert, wie eine Sonneneinstrahlung auf Gebäudebereiche bestimmt werden kann.

Das Gebäude 1 weist ein Dach 2 auf. In Figur 1 ist ein physischer Sensor 3 gestrichelt dargestellt. Der physische Sensor 3 ist in dem physischen Gebäude, das in den Figuren nicht dargestellt ist, auf dem Dach 2 angeordnet. In Fig. 1 ist der physische Sensor 3 nur zu Veranschaulichungszwecken dargestellt, um zu zeigen, dass die Oberfläche an dem der physische Sensor 3 angeordnet ist, sich von den Oberflächen 4 unterscheidet, an denen virtuelle Sensoren 6 angeordnet sind. Darüber hinaus kann bei einer alternativen Ausführung der physische Sensor 3 nicht an dem Dach angeordnet sein. Bei dieser Ausführung kann der physische Sensor 3 ein Sensor einer Wetterstation sein, die dem Gebäude 1 beispielsweise am nächsten angeordnet ist.

Der physische Sensor 3, misst eine Sonneneinstrahlung. Somit kann mittels des physischen Sensors 3 die ihm über einen Zeitraum zugeführte Sonnenenergie bestimmt werden.

Darüber hinaus weist das modellierte Gebäude 1 mehrere Außenwände 4 und Gebäudefenster 5 auf. An den Außenwänden 4 ist eine Vielzahl von virtuellen Sensoren 6 angeordnet. Die virtuellen Sensoren 6 sind an den Außenwänden 4 und den Gebäudefenstern 5 angeordnet. Die virtuellen Sensoren 6 sind nicht am Dach 2 angeordnet.

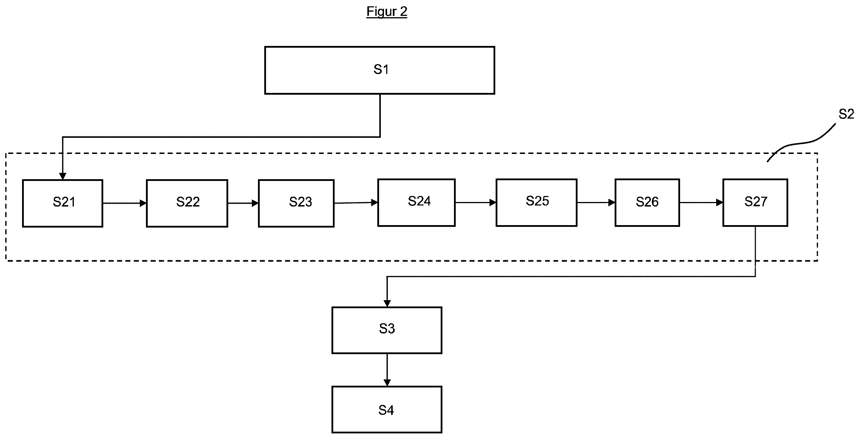

Fig. 2 zeigt einen Ablauf des erfindungsgemäßen Verfahrens. Bei einem ersten Verfahrensschritt S1 des erfindungsgemäßen Verfahrens wird die von dem physischen Sensor 3 gemessene Sonneneinstrahlung empfangen. Die Daten können in einem elektrischen Speicher hinterlegt und/oder können an eine nicht dargestellten Rechnereinrichtung, auf der das Verfahren ausgeführt wird, übermittelt werden. Insbesondere können Informationen zu einer direkten Sonneneinstrahlung und/oder einer diffusiven Sonneneinstrahlung an die Rechnereinrichtung übermittelt werden. Die direkte Sonneneinstrahlung und/oder diffuse Sonneneinstrahlung wird durch einen physischen Sensor oder mehrere Sensoren gemessen werden.

Anschließend wird in einem zweiten Verfahrensschritt S2 wenigstens ein Korrekturfaktor bestimmt, der von der empfangenen Sonneneinstrahlung abhängt. Dabei werden für jeden virtuellen Sensor mehrere Korrekturfaktoren bestimmt, nämlich ein Korrekturfaktor für die direkte Sonneneinstrahlung und ein anderer Korrekturfaktor für die direkte Sonneneinstrahlung, die zur Berechnung der direkten Sonneneinstrahlung herangezogen werden, und ein anderer Korrekturfaktor für die diffuse Sonneneinstrahlung und ein anderer Korrekturfaktor für die diffuse Sonneneinstrahlung, die zur Berechnung der diffusen Sonneneinstrahlung herangezogen werden.

Daraufhin wird in einem dritten Verfahrensschritt S3 die Sonneneinstrahlung auf den virtuellen Sensor 6 berechnet. Dazu werden, wie nachstehend näher ausgeführt ist, bei der Berechnung die in dem ersten Verfahrensschritt S1 bestimmte Sonneneinstrahlung auf den physischen Sensor 3 und die bestimmten Korrekturfaktoren, herangezogen.

Dabei wird für jeden der in Figur 1 gezeigten virtuellen Sensoren 6 der wenigstens eine Korrekturfaktor berechnet. Da die Berechnung für jeden virtuellen Sensor 6 gleich erfolgt, wird nachfolgend die Berechnung der Sonneneinstrahlung auf einen virtuellen Sensor 6 beschrieben.

Nach der Berechnung der Sonneneinstrahlung auf den virtuellen Sensor 6 ist die Sonneneinstrahlung auf den Gebäudeabschnitt bekannt, an dem der virtuelle Sensor 6 angeordnet ist. Insbesondere ist bekannt, welche Außenwände 4, welche Sonneinstrahlung zu welcher Zeit empfangen. Diese Information kann zur Steuerung oder Regelung von den Figuren nicht dargestellten Sonnenschutzanlagen eingesetzt werden, was im vierten Verfahrensschritt S4 erfolgt.

Wie vorstehend erläutert ist, werden im zweiten Verfahrensschritt S2 für jeden virtuellen Sensor mehrere Korrekturfaktoren bestimmt. Die Ermittlung der Korrekturfaktoren kann, wie in Figur 2 dargestellt ist, nacheinander erfolgen. Alternativ kann die Ermittlung der Korrekturfaktoren gleichzeitig erfolgen.

Insbesondere werden in dem zweiten Verfahrensschritt S2 mehrere Korrekturfaktoren bestimmt. In einem ersten Teilschritt S21 wird eine Objektumgebung modelliert. Insbesondere werden im ersten Teilschritt 21 die Nachbarobjekte des Gebäudes 1 modelliert. Darüber hinaus wird eine Außenkontur des Nachbarobjekts oder der Nachbarobjekte modelliert. Dabei kann unter anderem die Höhe des Nachbarobjekts oder die Höhe der jeweiligen Nachbarobjekte modelliert werden.

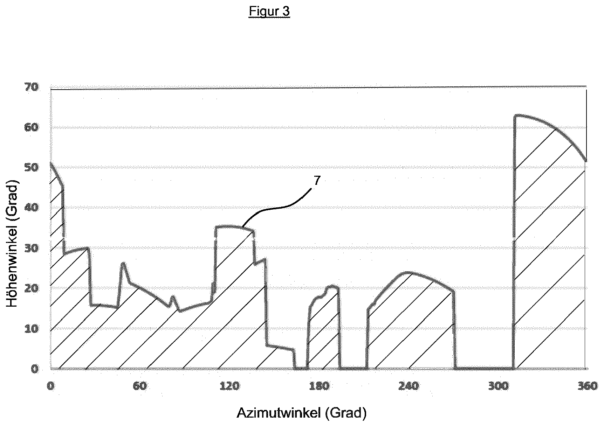

Anschließend wird in einem zweiten Teilschritt S22 ein Nachbarobjektverlauf berechnet. Der Nachbarobjektverlauf 7 hängt von einem Höhenwinkel und einem Azimutwinkel ab. Darüber hinaus hängt der Nachbarobjektverlauf 7 von der Außenkontur der Nachbarobjekte ab. Der Höhenwinkel des Nachbarobjekts entspricht dabei dem höchsten Bereich des Objekts in Höhenrichtung zu jedem Azimutwinkel. Die Nachbarobjekte sind die Gebäude, die zumindest einen Teil des Gebäudes 1 beschatten können. Fig. 3 zeigt ein Diagramm, das den Nachbarobjektverlauf 7 zeigt.

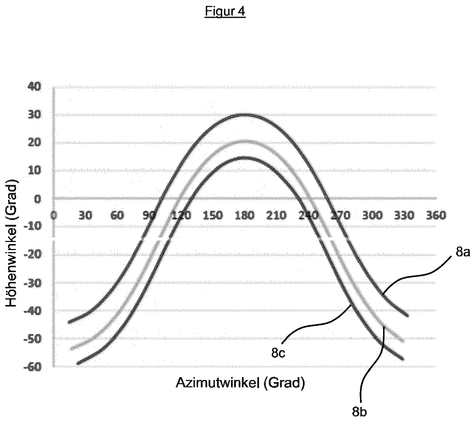

Anschließend wird, wie aus Figur 2 ersichtlich ist, in einem dritten Teilschritt S23 eine Sonnenbahn in Abhängigkeit von dem Höhenwinkel und dem Azimutwinkel bestimmt. Dabei wird die Sonnenbahn zu unterschiedlichen Zeitpunkten bestimmt. Fig. 4 zeigt ein Diagramm, das drei unterschiedliche Sonnenbahnen 8a-c zeigt. Insbesondere werden in Fig. 4 Sonnenbahnen 8a-8c zu unterschiedlichen Kalendertagen gezeigt. Dabei ist ersichtlich, dass die Höhenwinkel einer ersten Sonnenbahn 8a höher sind als die Höhenwinkel einer zweiten und einer dritten Sonnenbahn 8b, c.

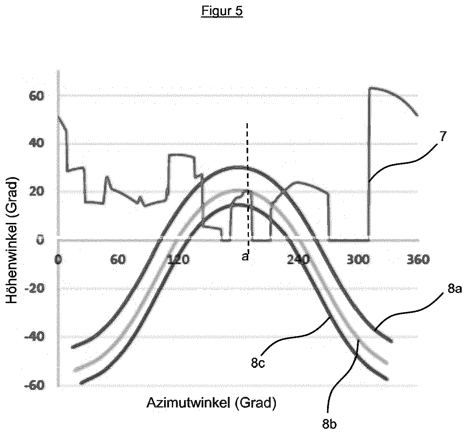

In einem vierten Teilschritt S24, der in Figur 2 gezeigt ist, wird basierend auf dem Nachbarobjektverlauf 7 und der Sonnenbahn 8a-c bestimmt, ob der virtuelle Sensor 6 beschattet ist oder nicht. Dazu wird, wie in Figur 5 ersichtlich ist, bestimmt, ob der Höhenwinkel der Sonnenbahn 8a-c größer ist als der Höhenwinkel des Objektverlaufs bei gleichem Azimutwinkel. Dabei zeigt Fig. 5 ein Diagramm, in dem der Nachbarobjektverlauf 7 und die Sonnenbahn 8a-8c eingezeichnet sind.

Für den Fall, dass der Höhenwinkel der Sonnenbahn 8a-c größer ist als der Höhenwinkel des Nachbarobjektverlaufs bei gleichem Azimutwinkel, wird der virtuelle Sensor nicht beschattet. Ist dagegen der Höhenwinkel der Sonnenbahn 8a-8c kleiner als der Höhenwinkel des Objektverlaufs, so ist der virtuelle Sensor 6 beschattet.

Wie aus Figur 5 ersichtlich ist, ist der Höhenwinkel der ersten Sonnenbahn 8a bei einem bestimmten Azimutwinkel a größer als der Höhenwinkel des Nachbarobjektverlaufs 7. In diesem Fall ist der virtuelle Sensor 6 nicht beschattet. Dagegen ist der Höhenwinkel der dritten Sonnenbahn 8c beim gleichen Azimutwinkel a kleiner als der Höhenwinkel des Nachbarobjektverlaufs 7. Somit ist der virtuelle Sensor 6 in diesem Fall beschattet. Für den Fall, dass ermittelt wird, dass der virtuelle Sensor 6 nicht beschattet wird, wird dem Korrekturwert für die direkte Sonneneinstrahlung ein Wert von 1 zugewiesen. Dagegen wird dem Korrekturwert für die direkte Sonneneinstrahlung ein Wert von 0 zugewiesen, wenn der virtuelle Sensor 6 beschattet wird.

In einem fünften Teilschritt S25 wird eine direkte Sonneneinstrahlung auf den virtuellen Sensor 6 ermittelt. Dazu wird der im vierten Teilschritt S24 bestimmte Korrekturfaktor für die direkte Sonneneinstrahlung und die im ersten Verfahrensschritt S1 empfangene direkte Sonneneinstrahlung auf den physischen Sensor 3 herangezogen. Darüber hinaus wird in dem fünften Teilschritt S25 der andere Korrekturfaktor für die direkte Sonneneinstrahlung bestimmt. Der andere Korrekturfaktor für die direkte Sonneneinstrahlung berücksichtigt, dass die direkte Sonneneinstrahlung unter einem Einstrahlungswinkel auf den Gebäudebereich trifft, an dem der virtuelle zweite Sensor positioniert ist.

Dabei hängt der Einstrahlungswinkel und somit der andere Korrekturfaktor für die direkte Sonneneinstrahlung von dem Neigungswinkel einer Gebäudefläche und dem Azimutwinkel einer Flächennormalen der Gebäudefläche sowie dem Azimutwinkel und Höhenwinkel der Sonne ab. Die Gebäudefläche entspricht der Fläche, an der der virtuelle Sensor platziert ist. Der andere Korrekturfaktor für die direkte Sonneneinstrahlung wird mit dem Korrekturfaktor und dem Wert der Sonneneinstrahlung multipliziert, um die direkte Sonneneinstrahlung auf den virtuellen Sensor zu berechnen.

In einem sechsten Teilschritt S26 wird der Korrekturfaktor für die diffuse Sonneneinstrahlung bestimmt. Der Korrekturfaktor für die diffuse Sonneneinstrahlung hängt von dem Nachbarobjektverlauf 7 und dem Azimutwinkel ab. Insbesondere wird die von den Nachbarobjekten entlang des Azimutwinkels eingeschlossene Fläche berechnet. Diese Fläche ist in Figur 3 gestrichelt dargestellt. Diese Fläche wird ins Verhältnis gesetzt zu einer Gesamtfläche. Die Gesamtfläche entspricht der von den dem Nachbarobjekt oder der Nachbarobjekte entlang des Azimutwinkels eingeschlossenen Fläche und der nicht eingeschlossenen Fläche, von der der visuelle Sensor mit Sonnenlicht beaufschlagt werden kann.

Bei einem siebten Teilschritt S27 wird die diffuse Sonneneinstrahlung auf den virtuellen Sensor 6 bestimmt. Dazu wird der in dem sechsten Teilschritt S26 ermittelte Korrekturfaktor für die diffuse Sonneneinstrahlung und die in dem ersten Verfahrensschritt S1 bestimmte Sonneneinstrahlung herangezogen. Darüber hinaus wird im siebten Teilschritt S27 ein anderer Korrekturfaktor für die diffuse Sonneneinstrahlung berechnet. Der andere Korrekturfaktor für die diffuse Sonneneinstrahlung hängt von dem Neigungswinkel des Gebäudebereichs ab, an dem der andere virtuelle Sensor platziert ist. Der andere Korrekturfaktor für die diffuse Sonneneinstrahlung berücksichtigt, dass die diffuse Sonneneinstrahlung unter einem Einstrahlungswinkel auf den Gebäudebereich trifft, an dem der virtuelle zweite Sensor positioniert ist.

Bei dem dritten Verfahrensschritt S3 wird die Sonneinstrahlung auf den virtuellen Sensor 6 bestimmt. Dazu wird die im fünften Verfahrensschritt S25 bestimmte direkte Sonneinstrahlung auf den virtuellen Sensor 6 und die in dem siebten Verfahrensschritt S27 bestimmte diffuse Sonneinstrahlung herangezogen. Insbesondere wird die bestimmte direkte Sonneneinstrahlung auf den virtuellen Sensor 6 mit der bestimmten diffusen Sonneneinstrahlung auf den virtuellen Sensor 6 addiert, um die Sonneneinstrahlung auf den virtuellen Sensor 6 zu bestimmen.

Die Sonneneinstrahlung auf den virtuellen Sensor 6 kann in einem vierten Verfahrensschritt S4 zur Steuerung oder Regelung von beispielsweise einer Sonnenschutzanlage eines Gebäudes eingesetzt werden.

### Bezugszeichenliste

- 1: Gebäude
- 2: Dach
- 3: physischer Sensor
- 4: Außenwand
- 5: Gebäudefenster
- 6: virtueller Sensor
- 7: Nachbarobjektverlauf
- 8a: erste Sonnenbahn
- 8b: zweite Sonnenbahn
- 8c: dritte Sonnenbahn

- a: Azimutwinkel

- S1: erster Verfahrensschritt
- S2: zweiter Verfahrensschritt
- S3: dritter Verfahrensschritt
- S4: vierter Verfahrensschritt

- S21: erster Teilschritt
- S22: zweiter Teilschritt
- S23: dritter Teilschritt
- S24: vierter Teilschritt
- S25: fünfter Teilschritt
- S26: sechster Teilschritt
- S27: siebter Teilschritt

## Patentansprüche

1. Computerimplementiertes Verfahren zum Bestimmen einer Sonneneinstrahlung auf zumindest einen Bereich eines modellierten Objekts, wobei das Verfahren folgende Schritte aufweist:
a. Empfangen einer von wenigstens einem physischen Sensor (3) gemessenen Sonneneinstrahlung, wobei eine direkte Sonneneinstrahlung und eine diffuse Sonneneinstrahlung durch den wenigstens einen physischen Sensor (3) gemessen wird, und
b. Bestimmen von mehreren Korrekturfaktoren für einen virtuellen Sensor (6), wobei
ein Korrekturfaktor für die direkte Sonneneinstrahlung, der davon abhängt, ob der virtuelle Sensor abgeschattet wird, und ein anderer Korrekturfaktor für die direkte Sonneneinstrahlung, der von einem Azimutwinkel und Neigungswinkel einer Objektoberfläche, an dem der virtuelle Sensor positioniert ist, und dem Azimutwinkel und dem Höhenwinkel der Sonne abhängt, bestimmt werden und
**dadurch gekennzeichnet**,
ein Korrekturfaktor für die diffuse Sonneneinstrahlung, der von einem Nachbarobjektverlauf und einem Azimutwinkel abhängt, und ein anderer Korrekturfaktor für die diffuse Sonneneinstrahlung, der von einem Neigungswinkel der Objektoberfläche abhängt, an dem der virtuelle Sensor positioniert ist, bestimmt werden und
c. Berechnen der Sonneneinstrahlung auf den virtuellen Sensor (6) unter Berücksichtigung der empfangenen Sonneneinstrahlung und der Korrekturfaktoren.

2. Computerimplementiertes Verfahren nach Anspruch 1, **dadurch gekennzeichnet, dass**
a. die vom physischen Sensor gemessene Sonneneinstrahlung in einem elektrischen Speicher hinterlegt ist und/oder dass
b. der physische Sensor (3) auf einem dem modellierten Objekt zugeordneten physischen Objekt angebracht ist und/oder dass
c. das modellierte Objekt mit dem wenigstens einem virtuellen Sensor (6) versehen wird, bevor der wenigstens eine Korrekturfaktor bestimmt wird und/oder dass
d. der wenigstens eine Korrekturfaktor davon abhängt, wo der virtuelle Sensor an dem Objekt angebracht ist.

3. Computerimplementiertes Verfahren nach Anspruch 1 oder 2, **dadurch gekennzeichnet, dass**
a. sich eine modellierte Objektoberfläche, die der physischen Objektoberfläche entspricht, an der der physische Sensor (3) angeordnet ist, von einer anderen modellierten Objektoberfläche unterscheidet, an der der virtuelle Sensor (6) angeordnet ist.
b. ein Bestimmen, ob der wenigstens eine virtuelle Sensor (6) abgeschattet wird, zeitabhängig ist und/oder dass
c. iterativ bestimmt wird, ob der wenigstens eine virtuelle Sensor (6) abgeschattet wird, wobei die iterative Bestimmung je Zeitinkrement über ein Kalenderjahr durchgeführt wird.

4. Computerimplementiertes Verfahren nach einem der Ansprüche 1 bis 3, **dadurch gekennzeichnet, dass** beim Bestimmen, ob der wenigstens eine virtuelle Sensor (6) abgeschattet ist, eine Objektumgebung modelliert wird insbesondere und dass eine Außenkontur eines Nachbarobjekts (7) und/oder eine Höhe eines Nachbarobjekts modelliert wird .

5. Computerimplementiertes Verfahren nach Anspruch 4, **dadurch gekennzeichnet, dass** ein Nachbarobjektverlauf berechnet wird, der abhängig von einem Azimutwinkel und einem Höhenwinkel ist.

6. Computerimplementiertes Verfahren nach einem der Ansprüche 1 bis 5, **dadurch gekennzeichnet, dass** eine Sonnenbahn berücksichtigt wird, die abhängig von einem Azimutwinkel und einem Höhenwinkel ist, insbesondere und dass die Sonnenbahn für mehrere Kalendertage eines Kalenderjahres und/oder für mehrere Zeitinkremente eines Kalendertages ermittelt wird.

7. Computerimplementiertes Verfahren nach Anspruch 5 oder 6, **dadurch gekennzeichnet, dass** durch Vergleich der Sonnenbahn mit dem Nachbarobjektverlauf (7) bestimmt wird, ob der virtuelle Sensor (6) beschattet ist oder nicht.

8. Computerimplementiertes Verfahren nach Anspruch 7, **dadurch gekennzeichnet, dass**
a. der virtuelle Sensor (6) nicht beschattet wird, wenn ein Höhenwinkel der Sonnenbahn größer ist als ein Höhenwinkel des Nachbarobjektverlaufs und der virtuelle Sensor (6) beschattet wird, wenn ein Höhenwinkel der Sonnenbahn kleiner ist als ein Höhenwinkel des Nachbarobjektverlaufs und/oder dass
b. eine Außenkontur eines Nachbarobjekts eine Beschattungsfläche begrenzt, wobei das Nachbarobjekt in einem Azimutwinkelbereich nicht beschattet wird, bei dem die Sonnenbahn innerhalb der Beschattungsfläche angeordnet ist.

9. Computerimplementiertes Verfahren nach einem der Ansprüche 1 bis 8, **dadurch gekennzeichnet, dass** dem Korrekturfaktor für die direkte Sonneneinstrahlung ein vorgegebener Wert zugewiesen wird, wenn der virtuelle Sensor nicht beschattet wird und ein anderer vorgegebener Wert zugewiesen wird, wenn der virtuelle Sensor beschattet wird.

10. Computerimplementiertes Verfahren nach einem der Ansprüche 1 bis 9, **dadurch gekennzeichnet, dass**
a. eine direkte Sonneneinstrahlung auf den virtuellen Sensor (6) unter Berücksichtigung der bereitgestellten, insbesondere gemessenen, direkten Sonneneinstrahlung und wenigstens eines Korrekturfaktors, insbesondere des Korrekturfaktors für die direkte Sonneneinstrahlung und/oder des anderen Korrekturfaktors für die direkte Sonneneinstrahlung, bestimmt wird und/oder dass
b. eine diffuse Sonneneinstrahlung auf den virtuellen Sensor (6) unter Berücksichtigung der bereitgestellten, insbesondere gemessenen, diffusen Sonneneinstrahlung und wenigstens eines Korrekturfaktors, insbesondere des Korrekturfaktors für die diffuse Sonneneinstrahlung und/oder des anderen Korrekturfaktors für die diffuse Sonneneinstrahlung, bestimmt wird.

11. Computerimplementiertes Verfahren nach Anspruch 10, **dadurch gekennzeichnet, dass** basierend auf der direkten Sonneneinstrahlung auf den virtuellen Sensor (6) und der diffusen Sonneneinstrahlung auf den virtuellen Sensor (6) die Sonneneinstrahlung auf den virtuellen Sensor (6) bestimmt wird.

12. Computerimplementiertes Verfahren nach einem der Ansprüche 1 bis 11, **dadurch gekennzeichnet, dass** das Objekt ein Gebäude (1) ist, insbesondere und dass eine Sonnenschutzanlage des Gebäudes (1) abhängig von der Sonneneinstrahlung auf den virtuellen Sensor (6) gesteuert wird und/oder dass der wenigstens eine virtuelle Sensor (6) an einem Gebäudefenster (5) angeordnet ist.

13. Rechnereinrichtung verbunden mit einem physischen Sensopr (3) und eingerichtet mit einem Computerprogramm nach Anspruch 14, welche bei Ablauf des Computerprogramms ein Verfahren nach einem der Ansprüche 1 bis 12 ausführt.

14. Computerprogramm, umfassend Befehle, die bei der Ausführung des Programms durch eine Rechnereinrichtung, die mit einem physischen Sensor verbunden ist, diese veranlassen, das Verfahren nach einem der Ansprüche 1 bis 12 durchzuführen.

15. Datenträger, auf dem das Computerprogramm nach Anspruch 14 gespeichert ist, oder Datenträgersignal, das das Computerprogramm nach Anspruch 14 überträgt.

## Claims

1. A computer-implemented method for determining solar irradiance on at least one area of a modeled object, the method having the following steps:
a. receiving of solar irradiance measured by at least one physical sensor (3), wherein a direct solar irradiance and diffuse solar irradiance are measured by the at least one physical sensor (3), and
b. determining of multiple correction factors for a virtual sensor (6), wherein
a correction factor for direct solar irradiance, which depends on whether the virtual sensor is shaded, and a further correction factor for direct solar irradiance, which depends on an azimuth angle and inclination angle of an object surface on which the virtual sensor is positioned and the azimuth angle and elevation angle of the sun, are determined and **characterized in that**
a correction factor for diffuse solar irradiance, which depends on the contour of a neighboring object and an azimuth angle, and a further correction factor for diffuse solar irradiance, which depends on an inclination angle of the object surface at which the virtual sensor is positioned, are determined, and
c. calculating of the solar irradiance on the virtual sensor (6) taking into account the received solar irradiance and the correction factors.

2. The computer-implemented method according to claim 1, **characterized in that**
a. the solar irradiance measured by the physical sensor is stored in an electrical memory and/or that
b. the physical sensor (3) is mounted on a physical object associated with the modeled object and/or that
c. the modeled object is provided with the at least one virtual sensor (6) before the at least one correction factor is determined and/or that
d. the at least one correction factor depends on where the virtual sensor is mounted on the object.

3. The computer-implemented method according to claim 1 or 2, **characterized in that**
a. a modeled object surface corresponding to the physical object surface on which the physical sensor (3) is arranged differs from a further modeled object surface on which the virtual sensor (6) is arranged;
b. a determination of whether the at least one virtual sensor (6) is shaded is time-dependent and/or that
c. it is iteratively determined whether the at least one virtual sensor (6) is shaded, wherein the iterative determination is carried out for each time increment over a calendar year.

4. The computer-implemented method according to any one of claims 1 to 3, **characterized in that**, when determining whether the at least one virtual sensor (6) is shaded, an object environment is modeled, in particular, and that an outer contour of a neighboring object (7) and/or a height of a neighboring object is modeled.

5. The computer-implemented method according to claim 4, **characterized in that** the contour of a neighboring object is calculated which is dependent on an azimuth angle and an elevation angle.

6. The computer-implemented method according to any one of claims 1 to 5, **characterized in that** a solar path is taken into account which depends on an azimuth angle and an elevation angle, in particular, and that the solar path is determined for multiple calendar days of a calendar year and/or for multiple time increments of a calendar day.

7. The computer-implemented method according to claim 5 or 6, **characterized in that**, by comparing the solar path with the contour of the neighboring object (7), it is determined whether the virtual sensor (6) is shaded or not.

8. The computer-implemented method according to claim 7, **characterized in that**
a. the virtual sensor (6) is not shaded if an elevation angle of the solar path is greater than an elevation angle of the contour of the neighboring object and the virtual sensor (6) is shaded if an elevation angle of the solar path is smaller than an elevation angle of the contour of the neighboring object and/or that
b. an outer contour of a neighboring object delimits a shading area, whereby the neighboring object is not shaded in an azimuth angle range in which the solar path is arranged within the shading area.

9. The computer-implemented method according to any one of claims 1 to 8, **characterized in that** the correction factor for direct solar irradiance is assigned a predetermined value when the virtual sensor is not shaded and a further predetermined value is assigned when the virtual sensor is shaded.

10. The computer-implemented method according to any one of claims 1 to 9, **characterized in that**
a. direct solar irradiance on the virtual sensor (6) is determined taking into account the provided, in particular measured, direct solar irradiance and at least one correction factor, in particular the correction factor for the direct solar irradiance and/or the other correction factor for the direct solar irradiance, and/or that
b. diffuse solar irradiance on the virtual sensor (6) is determined taking into account the provided, in particular measured, diffuse solar irradiance and at least one correction factor, in particular the correction factor for the diffuse solar irradiance and/or the other correction factor for the diffuse solar irradiance.

11. The computer-implemented method according to claim 10, **characterized in that** the solar irradiance on the virtual sensor (6) is determined based on direct solar irradiance on the virtual sensor (6) and diffuse solar irradiance on the virtual sensor (6).

12. The computer-implemented method according to any one of claims 1 to 11, **characterized in that** the object is a building (1), in particular, and that a solar shading system of the building (1) is controlled depending on the solar irradiance on the virtual sensor (6) and/or that the at least one virtual sensor (6) is arranged on a building window (5).

13. A computer device, connected to a physical sensor (3) and equipped with a computer program according to claim 14, which performs a method according to any one of claims 1 to 12 when the computer program is executed.

14. A computer program, comprising instructions which, when executed by a computing device connected to a physical sensor, cause the device to perform the method according to any one of claims 1 to 12.

15. A data carrier on which the computer program according to claim 14 is stored, or a data carrier signal transmitting the computer program according to claim 14.

## Revendications

1. Procédé mis en œuvre par ordinateur pour déterminer une irradiance solaire sur au moins une zone d'un objet modélisé, le procédé présentant les étapes suivantes :
a. réception d'une irradiance solaire mesurée par au moins un capteur physique (3),dans lequel une irradiance solaire directe et une irradiance solaire diffuse sont mesurées par l'au moins un capteur physique (3), et
b. détermination de plusieurs facteurs de correction pour un capteur virtuel (6), dans lequel
un facteur de correction pour l'irradiance solaire directe, qui dépend du fait que le capteur virtuel est ombragé, et un autre facteur de correction pour l'irradiance solaire directe, qui dépend d'un angle d'azimut et d'un angle d'inclinaison d'une surface d'objet sur laquelle le capteur virtuel est positionné et de l'angle d'azimut et de l'angle d'élévation du soleil, sont déterminés et **caractérisé en ce que**,
un facteur de correction pour l'irradiance solaire diffuse, qui dépend d'un chemin d'objet voisin et d'un angle d'azimut, et un autre facteur de correction pour l'irradiance solaire diffuse, qui dépend d'un angle d'inclinaison de la surface d'objet sur laquelle le capteur virtuel est positionné, sont déterminés et
c. calcul de l'irradiance solaire sur le capteur virtuel (6) en tenant compte de l'irradiance solaire reçue et des facteurs de correction.

2. Procédé mis en œuvre par ordinateur selon la revendication 1, **caractérisé en ce que**
a. l'irradiance solaire mesurée par le capteur physique est stockée dans une mémoire électrique et/ou **en ce que**
b. le capteur physique (3) est monté sur un objet physique associé à l'objet modélisé et/ou **en ce que**
c. l'objet modélisé est doté de l'au moins un capteur virtuel (6) avant que l'au moins un facteur de correction ne soit déterminé et/ou **en ce que**
d. l'au moins un facteur de correction dépend de l'endroit où le capteur virtuel est monté sur l'objet.

3. Procédé mis en œuvre par ordinateur selon la revendication 1 ou 2, **caractérisé en ce que**
a. une surface d'objet modélisée, qui correspond à la surface d'objet physique sur laquelle est agencé le capteur physique (3), diffère d'une autre surface d'objet modélisée sur laquelle est agencé le capteur virtuel (6),
b. une détermination établissant si l'au moins un capteur virtuel (6) est ombragé dépend du temps et/ou **en ce que**
c. il est déterminé de manière itérative si l'au moins un capteur virtuel (6) est ombragé, dans lequel la détermination itérative est réalisée par incrément de temps sur une année calendaire.

4. Procédé mis en œuvre par ordinateur selon l'une des revendications 1 à 3, **caractérisé en ce que** lors de la détermination établissant si l'au moins un capteur virtuel (6) est ombragé, un environnement d'objet est modélisé, en particulier, et **en ce qu'**un contour externe d'un objet voisin (7) et/ou une hauteur d'un objet voisin sont modélisés.

5. Procédé mis en œuvre par ordinateur selon la revendication 4, **caractérisé en ce qu'**une trajectoire d'objet voisin est calculée, laquelle dépend d'un angle d'azimut et d'un angle d'élévation.

6. Procédé mis en œuvre par ordinateur selon l'une des revendications 1 à 5, **caractérisé en ce qu'**une course solaire est prise en compte, laquelle dépend en particulier d'un angle d'azimut et d'un angle d'élévation, et **en ce que** la course solaire est évaluée pour plusieurs jours calendaires d'une année calendaire et/ou pour plusieurs incréments de temps d'un jour calendaire.

7. Procédé mis en œuvre par ordinateur selon la revendication 5 ou 6, **caractérisé en ce qu'**en comparant la course solaire avec la trajectoire d'objet voisin (7), il est déterminé si le capteur virtuel (6) est ombragé ou non.

8. Procédé mis en œuvre par ordinateur selon la revendication 7, **caractérisé en ce que**
a. le capteur virtuel (6) n'est pas ombragé si un angle d'élévation de la course solaire est supérieur à un angle d'élévation de la trajectoire d'objet voisin et le capteur virtuel (6) est ombragé si un angle d'élévation de la course solaire est inférieur à un angle d'élévation de la trajectoire d'objet voisin et/ou **en ce que**
b. un contour externe d'un objet voisin délimite une zone d'ombrage, dans lequel l'objet voisin n'est pas ombragé dans une plage d'angles d'azimut dans laquelle la course solaire est agencée à l'intérieur de la zone d'ombrage.

9. Procédé mis en œuvre par ordinateur selon l'une des revendications 1 à 8, **caractérisé en ce que** le facteur de correction pour l'irradiance solaire directe se voit attribuer une valeur prédéfinie lorsque le capteur virtuel n'est pas ombragé et se voit attribuer une autre valeur prédéfinie lorsque le capteur virtuel est ombragé.

10. Procédé mis en œuvre par ordinateur selon l'une des revendications 1 à 9, **caractérisé en ce que**
a. une irradiance solaire directe sur le capteur virtuel (6) est déterminée en tenant compte de l'irradiance solaire directe fournie, en particulier mesurée, et d'au moins un facteur de correction, en particulier le facteur de correction pour l'irradiance solaire directe et/ou l'autre facteur de correction pour l'irradiance solaire directe, et/ou **en ce que**
b. une irradiance solaire diffuse sur le capteur virtuel (6) est déterminée en tenant compte de l'irradiance solaire diffuse fournie, en particulier mesurée, et d'au moins un facteur de correction, en particulier le facteur de correction pour l'irradiance solaire diffuse et/ou l'autre facteur de correction pour l'irradiance solaire diffuse.

11. Procédé mis en œuvre par ordinateur selon la revendication 10, **caractérisé en ce que** l'irradiance solaire sur le capteur virtuel (6) est déterminée sur la base de l'irradiance solaire directe sur le capteur virtuel (6) et de l'irradiance solaire diffuse sur le capteur virtuel (6).

12. Procédé mis en œuvre par ordinateur selon l'une des revendications 1 à 11, **caractérisé en ce que** l'objet est un bâtiment (1), en particulier, et **en ce qu'**un système de protection solaire du bâtiment (1) est commandé en fonction de l'irradiance solaire sur le capteur virtuel (6) et/ou en ce que l'au moins un capteur virtuel (6) est agencé sur une fenêtre (5) de bâtiment.

13. Dispositif informatique connecté à un capteur physique (3) et équipé d'un programme informatique selon la revendication 14, qui exécute un procédé selon l'une des revendications 1 à 12 lorsque le programme informatique est exécuté.

14. Programme informatique comprenant des instructions qui, lors de l'exécution du programme par un dispositif informatique, qui est connecté à un capteur physique, amènent celui-ci à exécuter le procédé selon l'une des revendications 1 à 12.

15. Support de données sur lequel est stocké le programme informatique selon la revendication 14, ou signal de support de données qui transmet le programme informatique selon la revendication 14.
